# EUROPEAN PATENT SPECIFICATION

(11) **EP 2 794 347 B1**
(45) Date of publication and mention of the grant of the patent: **05.02.2020**
(21) Application number: 12809940.5
(22) Date of filing: 13.12.2012
(51) Int. Cl.: B60P 3/20

(54) **HYDRAULIC TRANSPORT REFRIGERATION SYSTEM**
HYDRAULISCHES TRANSPORTKÜHLSYSTEM
SYSTÈME DE RÉFRIGÉRATION DE TRANSPORT HYDRAULIQUE

(30) Priority: 19.12.2011 US 201161577126 P
(43) Date of publication of application: 29.10.2014
(73) Proprietor: Carrier Corporation, Farmington, CT 06034 (US)
(72) Inventor: STEELE, John T., Marcellus, New York 13108 (US)
(74) Representative: Schmitt-Nilson Schraud Waibel Wohlfrom Patentanwälte Partnerschaft mbB
(86) International application number: PCT/US2012/069446
(87) International publication number: WO 2013/096083

(56) References cited:
- WO-A2-2011/112663
- US-A- 5 794 734
- US-A1- 2004 200 230
- US-A1- 2008 060 857

## Description

### BACKGROUND OF THE INVENTION

Embodiments of the invention relate generally to transport refrigeration, and more particularly to a hydraulic transport refrigeration system.

Existing transport refrigeration systems use an engine (e.g., gas or diesel engine) to drive refrigeration system components (e.g., compressor, fans). In order to improve efficiency and reduce emissions, hybrid systems have been proposed to power the transport refrigeration system. One hybrid system, described in U.S. Patent Application Publication 20110000244 and assigned to Carrier Corporation, uses an electrical hybrid power supply. While existing designs are well suited for their intended purposes, improvements in hybrid transport refrigeration systems would be well received in the art.

US 5 794 734 A shows a method of supplying driving energy to subassemblies of a vehicle having an engine, a braking system including a brake pedal, a hydraulic machine, a hydraulic accumulator and a clutch having an engaged state for connecting the engine to the hydraulic machine for driving the hydraulic machine from the engine and a disengaged state for disconnecting the engine from the hydraulic machine.

US 2004/200230 A1 shows a hydraulic power unit for a refrigeration system. According to one aspect of the invention, the power unit is provided for driving the refrigeration system of a truck having an engine for propelling the truck and a power take off from the engine. The refrigeration system has a compressor for compressing a refrigerant and an evaporator which is cooled by the compressed refrigerant. The power unit comprises a pump, a compressor motor, and a hydraulic circuit. The pump is adapted for pumping hydraulic fluid and for connection to the power take off for driving the pump. The compressor motor is adapted for driving the compressor in response to receiving hydraulic fluid from the pump. The hydraulic circuit is adapted for conducting the hydraulic fluid from the pump to the compressor motor and for conducting the hydraulic fluid from the compressor motor back to the pump.

US 2008/060857 shows a system for operating a hydraulically actuated device that is provided on a vehicle includes a power take-off unit that is adapted to be driven by a vehicle and a hydraulic pump that is driven by the power take-off unit. The system also includes an accumulator and a hydraulically actuated device. Lastly, the system includes a controller that causes the hydraulic pump to supply pressurized fluid to the hydraulically actuated device when the vehicle is moving.

### BRIEF DESCRIPTION OF THE INVENTION

An exemplary embodiment of the present invention is a transport refrigeration system according to claim 1.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 depicts a hydraulic transport refrigeration system in exemplary embodiments;
FIG. 2 depicts mounting of the transport refrigeration system of FIG. 1 to a trailer; and
FIG. 3 depicts an exemplary semi-hermetic compressor for use in the transport refrigeration system.

### DETAILED DESCRIPTION OF THE INVENTION

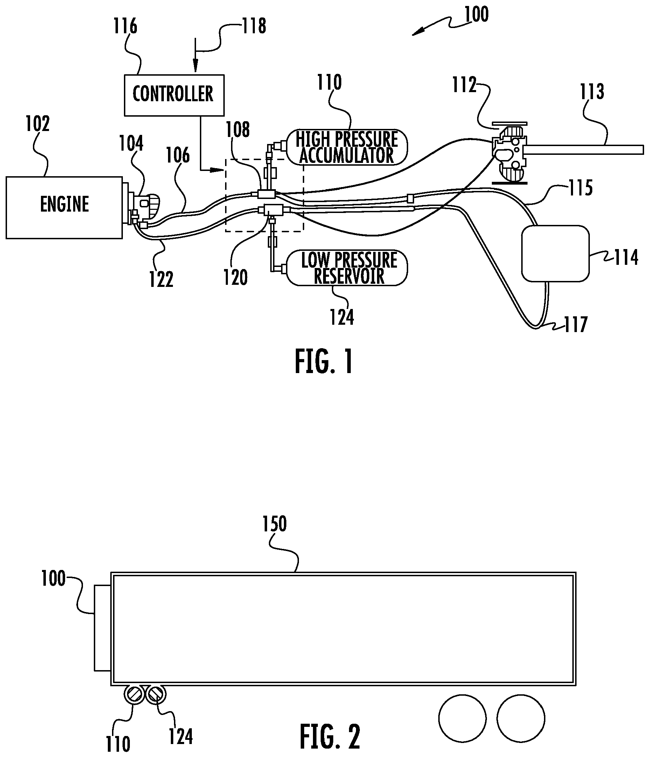

FIG. 1 depicts a hydraulic powered transport refrigeration system 100 in exemplary embodiments. The transport refrigeration system 100 includes an engine 102 that drives a pump 104. Pump 104 provides hydraulic fluid to components of the transport refrigeration system 100. Engine 102 may be a standalone engine (gas or diesel) or may be the engine of the vehicle directly driving pump 104 through, for example, a flywheel. Alternatively, engine 102 may be a combination of a standalone engine and the engine of the vehicle operating in conjunction. This allows the run time of the standalone engine to be reduced, particularly during periods when the vehicle engine has extra capacity (e.g., vehicle idling).

A supply line 106 from an output of pump 104 provides fluid to supply control valve 108. Supply control valve 108 is fluidly coupled to a high-pressure accumulator 110, motor 112 and compressor 114. Compressor 114 is coupled to supply control valve 108 by a compressor supply line 115. It is understood that multiple supply control valves may be used, each coupled to an individual system component. Supply line 106 may be coupled to a manifold, with several supply control valves independently controlled by controller 116 as described herein.

Motor 112 drives a fan shaft 113 for turning a fan (e.g., evaporator fan, condenser fan) in the transport refrigeration system 100. Only one motor 112 is shown, but it is understood that multiple motors 112 may be used, each for a respective system component. Further, a single motor 112 may be coupled to multiple fans, pumps, etc.

A controller 116 receives a number of input signals 118 indicative of the operational status of the transport refrigeration system 100 and adjusts supply control valve 108 accordingly. Input signals 118 may represent parameters such a pressure, temperature, speed, etc. and are generated by sensors within transport refrigeration system 100. Under periods of light load on the transport refrigeration system, controller 116 diverts fluid to high-pressure accumulator 110 to store fluid in a pressurized state. When demand on the transport refrigeration system increases, controller 116 can direct fluid from the high pressure accumulator 110 to motor 112 and compressor 114. This arrangement allows the compressor 114 speed to be independent of engine 102 speed. Controller 116 may be implemented using a general-purpose processor executing software instructions to perform the steps described herein. Alternatively, controller 116 may be implemented in hardware, or with a combination of hardware and software.

Motor 112 and compressor 114 are fluidly coupled to a return control valve 120. Compressor 114 is coupled to return control valve 120 by a compressor return line 117. Return control valve 120 is coupled to an input of pump 104 via a return line 122 and is coupled to a low-pressure reservoir 124. Controller 116 controls the return control valve 120 in response to input signals 118 indicative of the operational status of the transport refrigeration system 100. For example, under periods of light load on the transport refrigeration system 100, return control valve 120 diverts excess fluid to reservoir 124. It is understood that multiple return control valves may be used, each coupled to an individual system component.

In the embodiment of FIG. 1, compressor 114 is a hermetic, hydraulically driven compressor. Fluid from the supply control valve 108 drives the compressor and is returned to pump 104 through return control valve 120. In alternate designs, the pump 104 and compressor 114 are encased together in a common housing preventing loss of refrigerant that is typical in open drive systems.

FIG. 2 illustrates exemplary mounting of the transport refrigeration system 100 to a trailer 150. As shown in FIG. 2, the high-pressure accumulator 110 and the low pressure reservoir 124 are mounted to the underside of the trailer 150. The remaining components of transport refrigeration system 100 may be mounted on a front face of trailer 150. The evaporator coil and evaporator fan (not show) may be positioned within trailer 150 as known in the art.

The embodiment of FIG. 1 provides a hydraulic hybrid transport refrigeration system 100 that improves efficiency. The high-pressure accumulator 110 stores excess fluid pressure to drive system components. By storing the fluid pressure, engine 102 need not run, at least part of the time, when under light loads. Engine power may also be supplemented during high load transients such as during starts of the compressor 114, allowing a smaller engine 102 to be used. Additional savings would result as the engine could be shut down under light load and the system ran off the accumulated energy via the accumulator 110. Other savings may include reduced total cost of ownership of the unit, reduced noise, reduced weight, improved reliability of the compressor, design latitude for fan designs, removal of belts typically used for fans, design latitude for engine power/speed as well as component driven speed. In addition, variable pitch pumps and motors can be used as well as simple regulators to control speeds of fan, compressor, and other devices.

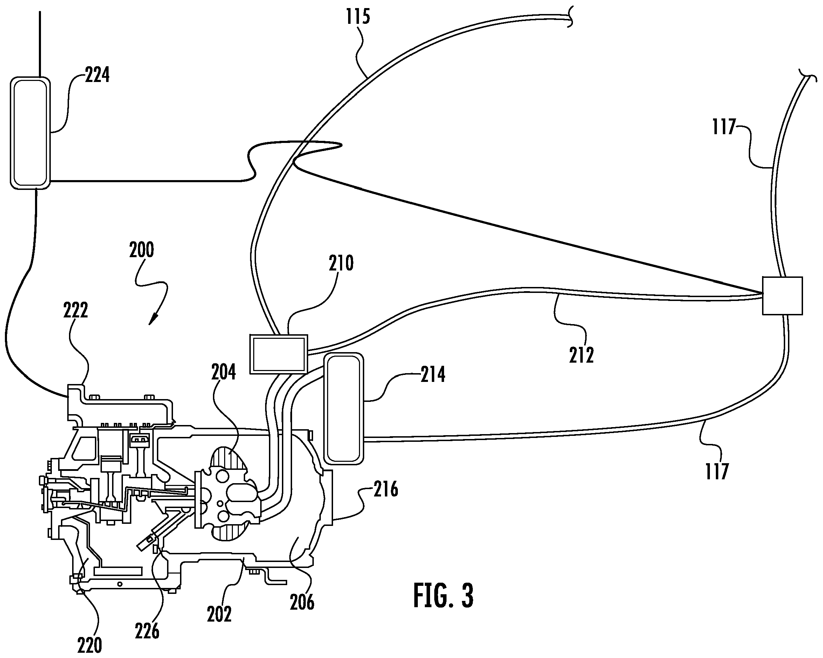

FIG. 3 depicts an exemplary semi-hermetic compressor 200 for use in the transport refrigeration system. Compressor 200 includes a casing 202 housing elements of the compressor. A hydraulic compressor motor 204 is positioned in a chamber 206 of casing 202. Compressor supply line 115 is coupled to a compressor control valve 210. Compressor control valve 210 is controlled by controller 116 and controls the flow of fluid to compressor motor 204. Compressor control valve 210 may divert some fluid to compressor return line 117 via a bypass line 212. This allows the compressor speed to be controlled independently of engine speed. Fluid returned from the compressor motor 204 is filtered at filter 214 and then provided to compressor return line 117.

Refrigerant from suction port 216 is drawn into compression mechanism 220 of compressor 200, where the refrigerant is compressed and output through discharge port 222. The compressor of FIG. 3 is a reciprocating compressor, but other types of compressors may be used. An oil separator 224 may be positioned in fluid communication with the discharge port 222. The oil separator 224 is fluidly coupled to the compressor return line 117 to return oil to the return control valve 120.

Referring to FIG. 3, the shaft of the motor 204 is not exposed to atmosphere, but rather to compressor internal pressure. This provides for better compressor vacuum and better performance. Also, any leaks in the seal around the shaft of motor 204 do not result in a loss of refrigerant. The fluid in the compressor supply line 115 that drives compressor motor 204 may be the same oil used to lubricate the compressor. If motor 204 leaks fluid, the leaked fluid can re-enter the compression mechanism 220 through an oil check valve 226 positioned between chamber 206 and compression mechanism 220.

While the invention has been described in detail in connection with only a limited number of embodiments, it should be readily understood that the invention is not limited to such disclosed embodiments. Rather, the invention can be modified to incorporate any number of variations, alterations or substitutions not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A transport refrigeration system (100) comprising:
an engine (102);
a hydraulic pump (104) driven by the engine (102);
a supply line (106) coupled to an output of the pump (104);
a supply control valve (108) coupled to the supply line (106); and
a refrigerant compressor (114) coupled to the supply control valve (108) through a compressor supply line (115), the refrigerant compressor (114) speed being responsive to fluid flow in the compressor supply line (115);
wherein the fluid in the compressor supply line (115) is oil suitable for lubricating the compressor (114); **characterized in that** the compressor (114) is a semi-hermetic compressor (114); and
wherein the compressor (114) includes a hydraulic motor (112) coupled to the compressor supply line (115); and wherein the compressor (114) includes a casing (202), the casing (202) having a chamber (206) containing the hydraulic motor (112), the casing (202) housing a compressor mechanism (220).

2. The transport refrigeration system (100) of claim 1 further comprising:
a high pressure accumulator (110) coupled to the supply control valve (108).

3. The transport refrigeration system (100) of claim 2 wherein:
the high pressure accumulator (110) is coupled to the compressor (114) through the supply control valve (108) when the engine (102) is at low speed.

4. The transport refrigeration system (100) of claim 2 wherein:
the high pressure accumulator (110) is coupled to the compressor (114) though the supply control valve (108) upon start of the compressor (114).

5. The transport refrigeration system (100) of claim 1 further comprising:
a return line (122) coupled to an input of the pump (104);
a return control valve (120) coupled to the return line (122); and
a reservoir (124) coupled to the return control valve (120).

6. The transport refrigeration system (100) of claim 1 further comprising:
a hydraulic motor (112) coupled to the supply control valve (108).

7. The transport refrigeration system (100) of claim 6 wherein:
the hydraulic motor (112) drives a fan.

8. The transport refrigeration system (100) of claim 1 further comprising:
a controller (116) for controlling the supply control valve (108) in response to input signals indicative of the operational status of the transport refrigeration system (100).

9. The transport refrigeration system (100) of claim 1 wherein:
the compressor (114) is a hermetic compressor (114).

10. The transport refrigeration system (100) of claim 1 further comprising:
an oil check valve (226) providing a passage for oil from the chamber (206) to the compressor mechanism (220).

11. The transport refrigeration system (100) of claim 1 further comprising:
a compressor control valve (210) coupled to the compressor supply line (115).

12. The transport refrigeration system (100) of claim 11 wherein:
the compressor (114) control valve (108) is coupled to a compressor return line (117) via a bypass line (212).

13. The transport refrigeration system (100) of claim 1 wherein:
the fluid in the compressor supply line (115) is oil suitable for lubricating the compressor (114).

14. The transport refrigeration system (100) of claim 1 wherein:
the engine (102) is a vehicle engine.

## Patentansprüche

1. Transportkühlsystem (100), umfassend:
einen Motor (102);
eine Hydraulikpumpe (104), die durch den Motor (102) angetrieben wird;
eine Zufuhrleitung (106), die an einen Ausgang der Pumpe (104) gekoppelt ist;
ein Zufuhrsteuerventil (108), das an die Zufuhrleitung (106) gekoppelt ist; und
einen Kältemittelverdichter (114), der durch eine Verdichterzufuhrleitung (115) an das Zufuhrsteuerventil (108) gekoppelt ist, wobei die Drehzahl des Kältemittelverdichters (114) auf die Fluidströmung in der Verdichterzufuhrleitung (115) anspricht;
wobei das Fluid in der Verdichterzufuhrleitung (115) Öl ist, das zum Schmieren des Verdichters (114) geeignet ist;
**dadurch gekennzeichnet, dass** der Verdichter (114) ein halbhermetischer Verdichter (114) ist; und
wobei der Verdichter (114) einen an die Verdichterzufuhrleitung (115) gekoppelten Hydraulikmotor (112) beinhaltet;
und wobei der Verdichter (114) ein Gehäuse (202) beinhaltet, wobei das Gehäuse (202) eine Kammer (206) aufweist, die den Hydraulikmotor (112) enthält, wobei in dem Gehäuse (202) ein Verdichtermechanismus (220) untergebracht ist.

2. Transportkühlsystem (100) nach Anspruch 1, ferner umfassend:
einen Hochdruckspeicher (110), der an das Zufuhrsteuerventil (108) gekoppelt ist.

3. Transportkühlsystem (100) nach Anspruch 2, wobei:
der Hochdruckspeicher (110) durch das Zufuhrsteuerventil (108) an den Verdichter (114) gekoppelt ist, wenn der Motor (102) eine niedrige Drehzahl aufweist.

4. Transportkühlsystem (100) nach Anspruch 2, wobei:
der Hochdruckspeicher (110) beim Start des Verdichters (114) durch das Zufuhrsteuerventil (108) an den Verdichter (114) gekoppelt ist.

5. Transportkühlsystem (100) nach Anspruch 1, ferner umfassend:
eine Rücklaufleitung (122), die an einen Einlass der Pumpe (104) gekoppelt ist;
ein Rücklaufsteuerventil (120), das an die Rücklaufleitung (122) gekoppelt ist; und
ein Reservoir (124), das an das Rücklaufsteuerventil (120) gekoppelt ist.

6. Transportkühlsystem (100) nach Anspruch 1, ferner umfassend:
einen Hydraulikmotor (112), der an das Zufuhrsteuerventil (108) gekoppelt ist.

7. Transportkühlsystem (100) nach Anspruch 6, wobei:
der Hydraulikmotor (112) einen Lüfter antreibt.

8. Transportkühlsystem (100) nach Anspruch 1, ferner umfassend:
eine Steuerung (116) zum Steuern des Zufuhrsteuerventils (108) als Reaktion auf Eingangssignale, die den Betriebsstatus des Transportkühlsystems (100) anzeigen.

9. Transportkühlsystem (100) nach Anspruch 1, wobei:
der Verdichter (114) ein hermetischer Verdichter (114) ist.

10. Transportkühlsystem (100) nach Anspruch 1, ferner umfassend:
ein Ölabsperrventil (226), das einen Durchlass für Öl von der Kammer (206) zu dem Verdichtermechanismus (220) bereitstellt.

11. Transportkühlsystem (100) nach Anspruch 1, ferner umfassend:
ein Verdichtersteuerventil (210), das an die Verdichterzufuhrleitung (115) gekoppelt ist.

12. Transportkühlsystem (100) nach Anspruch 11, wobei:
das Steuerventil (108) des Verdichters (114) über eine Bypassleitung (212) an eine Verdichterrücklaufleitung (117) gekoppelt ist.

13. Transportkühlsystem (100) nach Anspruch 1, wobei:
das Fluid in der Verdichterzufuhrleitung (115) Öl ist, das zum Schmieren des Verdichters (114) geeignet ist.

14. Transportkühlsystem (100) nach Anspruch 1, wobei:
der Motor (102) ein Fahrzeugmotor ist.

## Revendications

1. Système de réfrigération de transport (100) comprenant :
un moteur (102) ;
une pompe hydraulique (104) entraînée par le moteur (102) ;
une conduite d'alimentation (106) couplée à une sortie de la pompe (104) ;
une vanne de commande d'alimentation (108) couplée à la conduite d'alimentation (106) ; et
un compresseur frigorifique (114) couplé à la vanne de commande d'alimentation (108) à travers une conduite d'alimentation de compresseur (115), la vitesse du compresseur frigorifique (114) répondant à l'écoulement de fluide dans la conduite d'alimentation de compresseur (115) ;
dans lequel le fluide dans la conduite d'alimentation de compresseur (115) est une huile adaptée pour lubrifier le compresseur (114) ;
**caractérisé en ce que** le compresseur (114) est un compresseur semi-hermétique (114) ; et
dans lequel le compresseur (114) comporte un moteur hydraulique (112) couplé à la conduite d'alimentation de compresseur (115) ;
et dans lequel le compresseur (114) comporte un carter (202), le carter (202) ayant une chambre (206) contenant le moteur hydraulique (112), le carter (202) logeant un mécanisme de compresseur (220).

2. Système de réfrigération de transport (100) selon la revendication 1 comprenant en outre :
un accumulateur haute pression (110) couplé à la vanne de commande d'alimentation (108).

3. Système de réfrigération de transport (100) selon la revendication 2 dans lequel :
l'accumulateur haute pression (110) est couplé au compresseur (114) à travers la vanne de commande d'alimentation (108) lorsque le moteur (102) est à bas régime.

4. Système de réfrigération de transport (100) selon la revendication 2, dans lequel :
l'accumulateur haute pression (110) est couplé au compresseur (114) à travers la vanne de commande d'alimentation (108) lors du démarrage du compresseur (114).

5. Système de réfrigération de transport (100) selon la revendication 1 comprenant en outre :
une conduite de retour (122) couplée à une entrée de la pompe (104) ;
une vanne de commande de retour (120) couplée à la conduite de retour (122) ; et
un réservoir (124) couplé à la vanne de commande de retour (120).

6. Système de réfrigération de transport (100) selon la revendication 1 comprenant en outre :
un moteur hydraulique (112) couplé à la vanne de commande d'alimentation (108).

7. Système de réfrigération de transport (100) selon la revendication 6, dans lequel :
le moteur hydraulique (112) entraîne un ventilateur.

8. Système de réfrigération de transport (100) selon la revendication 1 comprenant en outre :
un dispositif de commande (116) pour commander la vanne de commande d'alimentation (108) en réponse à des signaux d'entrée indiquant l'état opérationnel du système de réfrigération de transport (100).

9. Système de réfrigération de transport (100) selon la revendication 1, dans lequel :
le compresseur (114) est un compresseur hermétique (114).

10. Système de réfrigération de transport (100) selon la revendication 1 comprenant en outre :
une vanne de retenue d'huile (226) fournissant un passage pour l'huile de la chambre (206) au mécanisme de compresseur (220) .

11. Système de réfrigération de transport (100) selon la revendication 1 comprenant en outre :
une vanne de commande de compresseur (210) couplée à la conduite d'alimentation de compresseur (115).

12. Système de réfrigération de transport (100) selon la revendication 11, dans lequel :
la vanne de commande (108) du compresseur (114) est couplée à une conduite de retour de compresseur (117) par l'intermédiaire d'une conduite de dérivation (212).

13. Système de réfrigération de transport (100) selon la revendication 1, dans lequel :
le fluide dans la conduite d'alimentation de compresseur (115) est une huile adaptée pour lubrifier le compresseur (114) .

14. Système de réfrigération de transport (100) selon la revendication 1, dans lequel :
le moteur (102) est un moteur de véhicule.
